# FASCICULE DE BREVET EUROPEEN

(11) **EP 1 880 789 B1**
(45) Date de publication et mention de la délivrance du brevet: **17.02.2010**
(21) Numéro de dépôt: 07075537.6
(22) Date de dépôt: 28.06.2007
(51) Int. Cl.: B23K 20/12, F01D 5/30

(54) **Procédé de fabrication d'un disque aubagé monobloc (BLISK)**
Verfahren zur Herstellung einer einstückigen Leitschaufelplatte (BLISK)
Method of manufacturing a single-piece bladed disc (BLISK)

(30) Priorité: 19.07.2006 FR 0606545
(43) Date de publication de la demande: 23.01.2008
(73) Titulaire: SNECMA, 75015 Paris (FR)
(72) Inventeur: Fabre, Adrien, 75014 Paris (FR); Rousselin, Stephane, 77850 Hericy (FR)
(74) Mandataire: Nguyen, Dominique

(56) Documents cités:
- EP-A2- 1 000 696
- US-A1- 4 592 120

## Description

La présente invention concerne la fabrication d'un disque aubagé monobloc, notamment pour rotor de turbomachine. Il concerne plus particulièrement un procédé de fabrication d'un tel disque par soudage par friction.

Deux types de disques aubagés existent. Un premier type de disque aubagé est obtenu par fixation mécanique d'aubes amovibles sur un disque, le disque et les aubes comportant des moyens de fixation pour s'assembler. Un second type de disque aubagé, connu sous le nom de disque aubagé monobloc (DAM ou « blisk » en anglais), est obtenu d'une seule pièce sans moyens de fixation.

Dans le premier type de disque aubagé, les moyens de fixation sur le disque et les aubes doivent résister aux forces centrifuges imposées lors de la rotation du disque et ont donc tendance à être massifs. Par conséquent, un tel disque est généralement plus lourd qu'un disque aubagé monobloc. Dans le domaine aéronautique, il est préférable d'utiliser des pièces légères, c'est pourquoi les disques aubagés monoblocs présentent un grand intérêt.

Une première technique de fabrication d'un disque aubagé monobloc consiste à usiner un tel disque à partir d'une ébauche obtenue par fonderie. Cette technique est décrite dans le document EP 1285714.

Une seconde technique de fabrication de disque aubagé monobloc consiste à employer le soudage par friction. Le soudage par friction est un procédé de soudage mécanique où la chaleur nécessaire pour le soudage est fournie en frottant l'une contre l'autre les pièces à assembler tout en exerçant une pression des pièces l'une contre l'autre. Cette technique de soudage s'effectue avantageusement sans ajout de métal liquide.

Des applications du soudage par friction pour la fabrication d'un disque aubagé monobloc sont illustrés dans les documents EP 0924016 et US 6524072. Le document EP 0924016 décrit une aube dont le mouvement de friction de l'aube par rapport au disque est sensiblement axial tandis que le document US 6524072 décrit une aube dont le mouvement de friction de l'aube par rapport au disque est tangentiel. D'autres mouvement de friction sont envisageables comme la rotation. Ces procédés, devant être répétés pour chaque aube, sont longs et fastidieux.

En outre, la mise en oeuvre des procédés décrits dans les documents EP 0924016 et US 6524072 suppose qu'il est possible de mettre suffisamment en mouvement l'aube par rapport au disque. Or, certaines aubes comportent un talon en leur extrémité supérieure, par opposition à leur extrémité inférieure qui comporte un pied. Un talon possède sensiblement une forme de secteur d'anneau et permet de reconstituer la veine aérodynamique extérieure d'écoulement des gaz d'une turbomachine. Un talon est donc assimilable à une plate-forme supérieure. Il est courant de concevoir un talon, identique pour l'ensemble des aubes, ce talon ayant une forme permettant un emboîtement avec les talons adjacents. L'ensemble des talons reliés bout à bout forme une couronne.

La forme particulière des talons ne permet pas l'application des procédés de soudage par friction connus pour la fabrication d'un disque aubagé monobloc car le talon d'une aube adjacente gênerait le mouvement de friction de l'aube à talon à souder sur le disque. Aucun document de l'art antérieur connu ne propose de procédé de fabrication d'aubes à talons sur un disque en employant le soudage par friction.

D'une manière plus générale, les mêmes problèmes peuvent se poser pour toutes les aubes qui comportent au moins un élément entrant en contact avec au moins une aube voisine, cet élément pouvant être, par exemple, une plate-forme inférieure reconstituant la veine aérodynamique intérieure d'écoulement des gaz d'une turbomachine ou une nageoire qui est assimilable à une plate-forme intermédiaire comme décrite dans le document US 5460488.

Par ailleurs, une précontrainte doit généralement être appliquée sur les aubes à talon, ce qui rend difficile le soudage par friction. La précontrainte consiste à soumettre les aubes à des efforts de compression ou de traction au cours de la mise en oeuvre du procédé de fabrication. En effet, une aube à talon est usinée directement avec une torsion angulaire de son profil aérodynamique de sorte que les talons ne sont par orientés dans l'alignement circonférentiel du disque. Pour obtenir cet alignement circonférentiel, lorsque les aubes sont assemblées sur le disque par leur pied, les talons sont mécaniquement solidarisées les uns aux autres en exerçant une précontrainte.

Enfin, le document US-A-4 592 120 décrit la fabrication d'un disque aubagé monobloc, les aubes étant soudées simultanément par diffusion au disque central.

Un premier objectif de l'invention est de proposer un procédé de fabrication d'un disque aubagé monobloc permettant le soudage par friction, d'une pluralité d'aubes comportant au moins élément entrant en contact avec au moins une aube voisine sur un disque.

Un second objectif de l'invention est de proposer un procédé de fabrication d'un disque aubagé monobloc par soudage par friction, permettant l'assemblage simultané d'une pluralité d'aubes sur un disque.

La solution proposée par l'invention est d'effectuer le soudage par friction d'une couronne d'aubes, préalablement solidarisées les unes aux autres, sur un disque.

A cet effet, l'invention propose un procédé de fabrication d'un disque aubagé monobloc comportant les étapes successives suivantes :
- disposition d'une pluralité d'aubes 1 en couronne dans un moule 2 à symétrie de révolution ;
- coulée d'un matériau dégradable 3, préalablement chauffé à une température supérieure à sa température de fusion, sur la couronne d'aubes 1 dans le moule 2;
- extraction de la couronne moulée 10 obtenue après solidification du matériau dégradable 3 ;
- soudage par friction de la couronne moulée 10 sur un disque 4 ; et
- élimination du matériau dégradable 3.

Le procédé selon l'invention s'applique remarquablement aux aubes comportant des éléments entrant en contact avec les aubes voisines.

Le soudage simultané de toutes les aubes sur le disque permet un gain de temps dans la fabrication du disque aubagé monobloc.

L'invention sera bien comprise et ses avantages apparaîtront mieux à la lecture de la description détaillée qui suit. La description se réfère aux figures annexées sur lesquelles :
- la figure 1 représente une aube selon une vue sensiblement de profil ;
- la figure 2 représente une aube conforme à la figure 1 selon une vue en élévation ;
- la figure 3 représente, en vue éclatée, les différents éléments constitutifs du moule selon l'invention ;
- la figure 4 représente une coupe partielle du moule assemblé selon l'invention dans laquelle une aube est disposée ;
- la figure 5 représente une couronne moulée et un disque destinés au soudage par friction ;

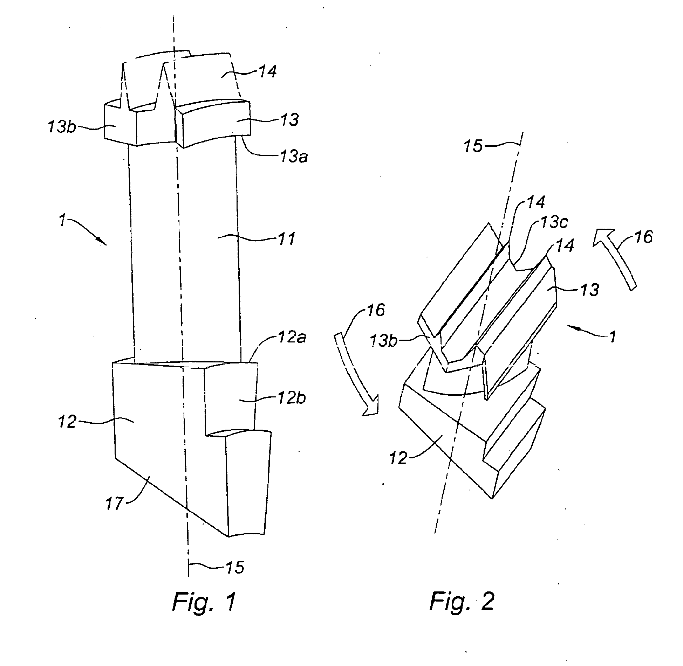

Comme illustrée sur la figure 1, une aube 1 comporte un profil aérodynamique 11 et un pied 12 en son extrémité inférieure. Le profil aérodynamique 11 de l'aube 1, en forme d'aile, a été préalablement usiné. Le pied 12 d'aube 1 est constitué d'un bloc relativement massif. Ce bloc comporte un excédent de matière au niveau de sa surface de friction 17 destiné à être consommé lors du soudage par friction. Un épaulement 12b est également prévu sur le pied 12 pour immobiliser radialement l'aube lors du soudage.

Dans certains cas, une aube 1 comporte en outre en son extremité supérieure un talon 13. La surface inférieure 13a du talon 13 permet de reconstituer une partie de la veine aérodynamique extérieure d'écoulement des gaz d'une turbomachine. Comme cela apparaît distinctement sur la figure 2, les formes des bords latéraux 13b et 13c du talon 13 sont complémentaires de sorte que les talons 13 identiques de deux aubes 1 adjacentes peuvent s'emboîter. La forme particulière des talons 13 permet d'éviter tout mouvement en extrémité de l'aube 1. Le talon 13 peut comporter en son sommet des léchettes 14 destinées à assurer l'étanchéité avec une virole de carter disposé en vis-à-vis lorsque le disque aubagé est installé dans une turbomachine. Une aube 1 à talon 13 est généralement usinée avec une légère torsion 16 de son profil aérodynamique 11 selon un axe radial 15.

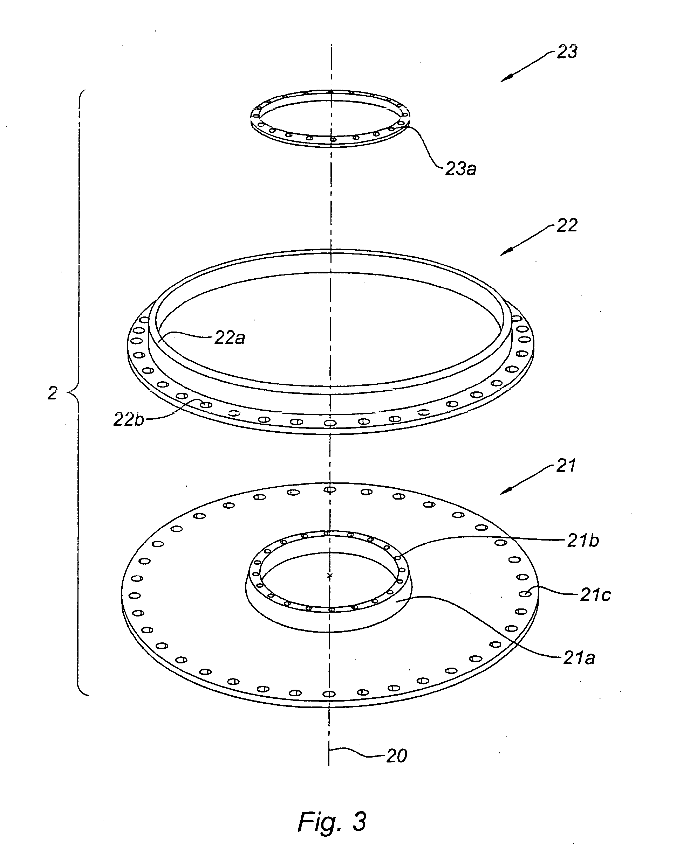

Un exemple de moule 2 est représenté sur la figure 3 en vue éclatée. Les différents éléments qui le composent sont démontables et préférentiellement à symétrie de révolution d'axe 20. Le moule 2 comporte un anneau inférieur 21, un anneau extérieur 22 et un anneau supérieur 23.

L'anneau inférieur 21, de forme plane, est muni sur sa périphérie interne d'une paroi annulaire 21a s'étendant axialement vers l'intérieur du moule 2 sur une hauteur correspondant à la « largeur » des aubes. L'anneau extérieur 22 comporte, sur sa périphérie interne, une paroi annulaire externe 22a s'étendant axialement vers l'intérieur du moule 2. L'anneau supérieur 23, de forme plane, est destiné à maintenir les aubes 1 fermement dans le moule 2 en exerçant une pression sur les pieds 12 des aubes 1. L'anneau inférieur 21, l'anneau extérieur 22 et l'anneau supérieur 23 peuvent être solidarisés au moyen de liaisons boulonnées. A cet effet, des taraudages 21 b, 21 c, 22b, 23a sont prévus sur chacun de ces éléments. Les dimensions des différents éléments 21, 22, 23 du moule 2 dépendent des cotes des aubes 1.

Pour la mise en oeuvre du procédé de fabrication d'un disque aubagé monobloc selon l'invention, les aubes 1 et le disque 4 ont été préalablement fabriqués.

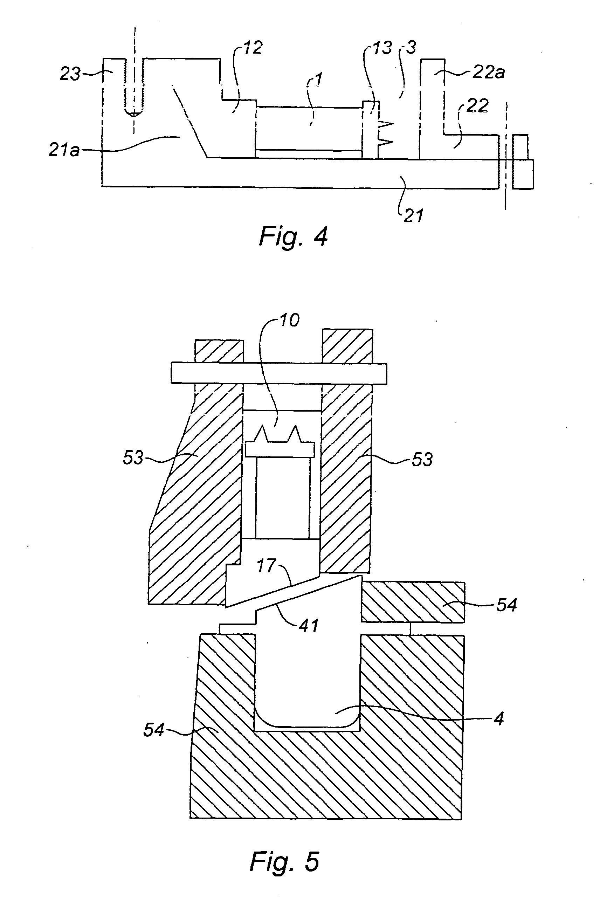

Dans une première étape de mise en oeuvre du procédé selon l'invention, les aubes 1 doivent être disposées en couronne radialement par rapport à l'axe 20 du moule 2 sur l'anneau inférieur 21 de manière identique à leur disposition finale autour du disque 2 sur lequel elles seront assemblées. Les pieds 12 des aubes entrent en contact avec la paroi 21a de l'anneau inférieur 21 par leur surface 17. Une précontrainte des aubes 1 est exercée par pression de l'anneau supérieur 23 sur les pieds 12 des aubes 1 ce qui force les talons 13 à s'aligner circonférentiellement de sorte que les bords latéraux 13b et 13c soient correctement positionnés et s'emboîtent. La figure 4 représente en coupe le moule 2 dans lequel une aube 1 est disposée.

Conformément à une deuxième étape du procédé, le matériau 3 dégradable, préalablement chauffé à une température supérieure à sa température de fusion, est coulé jusqu'à recouvrir au moins les profils aérodynamiques 11 et les talons 13 des aubes 1. Le matériau 3 est un matériau à bas point de fusion. On entend par « matériau à bas point de fusion », au sens de la présente invention, un matériau dont le point de fusion est inférieur à celui du matériau constituant les aubes 1 ou le disque 4. Des exemples d'un tel matériau 3 dégradable sont décrits ci-dessous.

Selon une troisième étape du procédé, la couronne moulée 10 est extraite après avoir laissé refroidir le matériau 3 jusqu'à sa solidification. Pour ce faire, les différents éléments 21, 22 et 23 du moule 2 sont démontés. La couronne moulée 10 obtenue est alors un anneau enfermant les aubes 1 précontraintes. De préférence, les éventuelles imperfections de la couronne moulée 10 sont éliminées par ébavurage.

La quatrième étape du procédé consiste à effectuer le soudage par friction de la couronne moulée 10. Les surfaces de friction 17 et 41 de la couronne moulée 10 et du disque 4 sont biseautées et possèdent toutes deux une forme tronconique complémentaire. Les excédents de matière prévus au niveau des surfaces de friction 17 et 41 sont destinés à être consommés lors du soudage par friction. Le soudage par friction s'effectue par une rotation relative de la couronne moulée 10 et du disque 4. Un épaulement 12b est prévu sur le pied 12 pour immobiliser radialement l'aube.

Deux modes de réalisation sont possibles. Selon un premier mode de réalisation, le disque 4 est mis en rotation à une haute vitesse et la couronne moulée 10 est pressée axialement contre le disque 4. Alternativement, selon un second mode de réalisation, la couronne moulée 10 est mise en rotation à une haute vitesse et le disque 4 est pressé axialement contre la couronne moulée 10. Pour ce faire, la couronne moulée 10 et le disque 4 sont maintenus par des dispositifs de maintien respectifs 53 et 54, par exemple des cales, pendant l'opération de soudage par friction. La figure 5 illustre une couronne moulée 10 et un disque 4 positionnés avant soudage.

Le type de soudage par friction appliquée est le soudage par friction inertiel. Dans ce cas, la vitesse de rotation est prédéterminée de manière à ce que, lorsque la rotation initiée s'arrête, le soudage escompté a été réalisé de manière suffisante.

Après l'opération de soudage, la dernière étape du procédé consiste à éliminer le matériau dégradable 3. Cette élimination peut s'effectuer chimiquement ou thermiquement selon le type de matériau dégradable 3 employé. Pour une élimination par dissolution chimique, le matériau dégradable 3 peut être une résine du type polyuréthane ou silicone dissoluble avec un solvant organique du type toluène. Pour une élimination thermique, le matériau peut être un alliage métallique à base plomb-étain du type seroban®. Une fois le matériau dégradable 3 éliminé, les talons 13 sont alors libérés de la précontrainte et restent alignés circonférentiellement.

Le disque aubagé monobloc obtenu peut subir d'autres traitements additionnels de finition comme un usinage dans la zone de soudure et un usinage du profil aérodynamique 11 des aubes 1.

Bien que l'exemple décrit ci-dessus se réfère essentiellement à des aubes 1 comportant un talon 13, le procédé selon l'invention est applicable à tout type d'aubes avec ou sans éléments entrant en contact les aubes voisines.

## Revendications

1. Procédé de fabrication d'un disque aubagé monobloc comportant les etapes successives suivantes:
• disposition d'une pluralité d'aubes (1) en couronne dans un moule (2) à symétrie de révolution ;
• coulée d'un matériau dégradable (3), préalablement chauffé à une température supérieure à sa température de fusion, sur la couronne d'aubes (1) dans le moule (2);
• extraction de la couronne moulée (10) obtenue après solidification du matériau dégradable (3) ;
• soudage de la couronne moulée (10) sur un disque (4) ; et
• élimination du matériau dégradable (3) ;
**caractérisé en ce que** le soudage est effectué par friction.

2. Procédé de fabrication d'un disque aubagé monobloc selon la revendication 1 **caractérisé en ce que** le soudage est réalisé par friction inertiel.

3. Procédé de fabrication d'un disque aubagé monobloc selon l'une des revendications précédentes **caractérisé en ce que** les surfaces de friction (17) et (41) de la couronne moulée (10) et du disque (4) sont biseautées et possèdent toutes deux une forme tronconique complémentaire.

4. Procédé de fabrication d'un disque aubagé monobloc selon l'une des revendications précédentes **caractérisé en ce que**, pendant l'opération de soudage par friction, le disque (4) est pressé axialement contre la couronne moulée (10).

5. Procédé de fabrication d'un disque aubagé monobloc selon l'une des revendications précédentes **caractérisé en ce que** chaque aube (1) comporte au moins un élément entrant en contact avec les aubes (1) voisines.

6. Procédé de fabrication d'un disque aubagé monobloc selon la revendication 5 **caractérisé en ce que** l'élément entrant en contact avec les aubes (1) voisines est un talon (13).

7. Procédé de fabrication d'un disque aubagé monobloc selon la revendication 5 **caractérisé en ce que** l'élément entrant en contact avec les aubes (1) voisines est une plate-forme inférieure ou intermédiaire.

8. Procédé de fabrication d'un disque aubagé monobloc selon l'une des revendications 5 à 7 **caractérisé en ce qu'**une précontrainte est exercée sur les aubes (1).

9. Procédé de fabrication d'un disque aubagé monobloc selon l'une des revendications précédentes **caractérisé en ce que** le matériau dégradable (3) possède une point de fusion intérieur à celui du matériau constituant les aubes (1) ou le disque (4).

10. Procédé de fabrication d'un disque aubagé monobloc selon la revendication 9 **caractérisé en ce que** le matériau dégradable (3) est éliminable chimiquement ou thermiquement.

11. Procédé de fabrication d'un disque aubagé monobloc selon la revendication 10 **caractérisé en ce que** le matériau dégradable (3) est une résine.

12. Procédé de fabrication d'un disque aubagé monobloc selon la revendication 11 **caractérisé en ce que** la résine est à base de polyuréthane ou de silicone.

13. Procédé de fabrication d'un disque aubagé monobloc selon la revendication 10 **caractérisé en ce que** le matériau (3) est un alliage métallique.

14. Procédé de fabrication d'un disque aubagé monobloc selon la revendication 13 **caractérisé en ce que** l'alliage est à base de plomb-étain.

## Claims

1. Process for manufacturing a blisk, comprising the following successive steps:
• arrangement of a plurality of blades (1) in the form of a ring in a mould (2) having symmetry of revolution;
• casting of a degradable material (3), preheated to a temperature above its melting point, onto the ring of blades (1) in the mould (2) ;
• extraction of the moulded ring (10) obtained after the degradable material (3) has solidified;
• welding of the moulded ring (10) onto a disc (4); and
• elimination of the degradable material (3),
**characterized in that** the welding is carried out by friction welding.

2. Process for manufacturing a blisk according to Claim 1, **characterized in that** the welding is carried out by inertial friction welding.

3. Process for manufacturing a blisk according to either of the preceding claims, **characterized in that** the friction surfaces (17) and (41) of the moulded ring (10) and of the disc (4) are bevelled and both possess a complementary frustoconical shape.

4. Process for manufacturing a blisk according to one of the preceding claims, **characterized in that**, during the friction welding operation, the disc (4) is pressed axially against the moulded ring (10).

5. Process for manufacturing a blisk according to one of the preceding claims, **characterized in that** each blade (1) includes at least one element coming into contact with the adjacent blades (1).

6. Process for manufacturing a blisk according to Claim 5, **characterized in that** the element coming into contact with the adjacent blades (1) is a shroud (13).

7. Process for manufacturing a blisk according to Claim 5, **characterized in that** the element coming into contact with the adjacent blades (1) is a lower or intermediate platform.

8. Process for manufacturing a blisk according to one of Claims 5 to 7, **characterized in that** a prestress is exerted on the blades (1).

9. Process for manufacturing a blisk according to one of the preceding claims, **characterized in that** the degradable material (3) possesses a melting point below that of the material constituting the blades (1) or the disc (4).

10. Process for manufacturing a blisk according to Claim 9, **characterized in that** the degradable material (3) is capable of being eliminated chemically or thermally.

11. Process for manufacturing a blisk according to Claim 10, **characterized in that** the degradable material (3) is a resin.

12. Process for manufacturing a blisk according to Claim 11, **characterized in that** the resin is based on a polyurethane or silicone.

13. Process for manufacturing a blisk according to Claim 10, **characterized in that** the material (3) is a metal alloy.

14. Process for manufacturing a blisk according to Claim 13, **characterized in that** the alloy is based on lead-tin.

## Patentansprüche

1. Verfahren zur Herstellung einer einstückigen Blisk, das die folgenden sukzessiven Schritte umfasst:
• Anordnen von mehreren Schaufeln (1) in einem Kranz in einer Form (2) mit Rotationssymmetrie;
• Gießen eines abbaubaren Materials (3), das vorzugsweise auf eine Temperatur erhitzt ist, die über seiner Schmelztemperatur liegt, auf den Kranz von Schaufeln (1) in der Form (2);
• Herausziehen des geformten Kranzes (10), der nach der Verfestigung des abbaubaren Materials (3) erhalten wird;
• Schweißen des geformten Kranzes (10) auf eine Scheibe (4) und
• Entfernen des abbaubaren Materials (3);
**dadurch gekennzeichnet, dass** das Schweißen mittels Reibschweißen durchgeführt wird.

2. Verfahren zur Herstellung einer einstückigen Blisk nach Anspruch 1, **dadurch gekennzeichnet, dass** das Schweißen mittels Trägheitsreibschweißen umgesetzt wird.

3. Verfahren zur Herstellung einer einstückigen Blisk nach einem der vorhergehenden Ansprüche, **dadurch gekennzeichnet, dass** die Reibungsflächen (17) und (41) des geformten Kranzes (10) und der Scheibe (4) abgeschrägt sind und beide über eine komplementäre Kegelform verfügen.

4. Verfahren zur Herstellung einer einstückigen Blisk nach einem der vorhergehenden Ansprüche, **dadurch gekennzeichnet, dass** die Scheibe (4) während des Reibschweißvorgangs axial gegen den geformten Kranz (10) gedrückt wird.

5. Verfahren zur Herstellung einer einstückigen Blisk nach einem der vorhergehenden Ansprüche, **dadurch gekennzeichnet, dass** jede Schaufel (1) mindestens ein Element umfasst, das in Kontakt mit den benachbarten Schaufeln (1) kommt.

6. Verfahren zur Herstellung einer einstückigen Blisk nach Anspruch 5, **dadurch gekennzeichnet, dass** das Element, das mit den benachbarten Schaufeln (1) in Kontakt kommt, ein Ansatz (13) ist.

7. Verfahren zur Herstellung einer einstückigen Blisk nach Anspruch 5, **dadurch gekennzeichnet, dass** das Element, das mit den benachbarten Schaufeln (1) in Kontakt kommt, eine untere oder mittlere Plattform ist.

8. Verfahren zur Herstellung einer einstückigen Blisk nach einem der Ansprüche 5 bis 7, **dadurch gekennzeichnet, dass** eine Vorspannung auf die Schaufeln (1) ausgeübt wird.

9. Verfahren zur Herstellung einer einstückigen Blisk nach einem der vorhergehenden Ansprüche, **dadurch gekennzeichnet, dass** das abbaubare Material (3) über einen Schmelzpunkt verfügt, der unter dem des Materials liegt, das die Schaufeln (1) oder die Scheibe (4) bildet.

10. Verfahren zur Herstellung einer einstückigen Blisk nach Anspruch 9, **dadurch gekennzeichnet, dass** das abbaubare Material (3) chemisch oder thermisch entfernt werden kann.

11. Verfahren zur Herstellung einer einstückigen Blisk nach Anspruch 10, **dadurch gekennzeichnet, dass** das abbaubare Material (3) ein Harz ist.

12. Verfahren zur Herstellung einer einstückigen Blisk nach Anspruch 11, **dadurch gekennzeichnet, dass** das Harz auf Basis von Polyurethan oder Silikon ist.

13. Verfahren zur Herstellung einer einstückigen Blisk nach Anspruch 10, **dadurch gekennzeichnet, dass** das Material (3) eine Metalllegierung ist.

14. Verfahren zur Herstellung einer einstückigen Blisk nach Anspruch 13, **dadurch gekennzeichnet, dass** die Legierung auf Basis von Blei/Zinn ist.
